(19) Europäisches Patentamt
European Patent Office
Office européen des brevets

(11) **EP 4 748 566 A1**

(12) **DEMANDE DE BREVET EUROPEEN**

(43) Date de publication:
**27.05.2026 Bulletin 2026/22**

(21) Numéro de dépôt: **25217528.6**

(22) Date de dépôt: **21.11.2025**

(51) Classification Internationale des Brevets (IPC):
**B32B 15/10** (2006.01)   **B32B 3/30** (2006.01)
**B21B 1/22** (2006.01)   **B21H 8/00** (2006.01)
**B32B 7/12** (2006.01)   **B32B 15/20** (2006.01)
**B32B 21/04** (2006.01)   **B44C 5/04** (2006.01)
**B62D 25/00** (2006.01)   **B62D 25/20** (2006.01)
**B62D 29/00** (2006.01)   **B62D 29/02** (2006.01)

(52) Classification Coopérative des Brevets (CPC):
**B32B 15/10; B21B 1/227; B21H 8/005; B32B 3/30;**
**B32B 7/12; B32B 15/20; B32B 21/04;**
**B62D 25/2054; B62D 29/008; B62D 29/02;**
B21B 2261/14; B32B 2307/538; B32B 2605/00

(84) Etats contractants désignés:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Etats d'extension désignés:
**BA**
Etats de validation désignés:
**GE KH LA MA MD TN**

(30) Priorité: **22.11.2024 FR 2412859**

(71) Demandeur: **Constellium Issoire**
**63500 Issoire (FR)**

(72) Inventeurs:
• **MILLOT, Coraline**
**38430 Moirans (FR)**
• **MOYROUD, Nicolas**
**38260 Le Mottier (FR)**
• **CHIFFOT, Hippolyte**
**63500 Varennes-sur-Usson (FR)**

(74) Mandataire: **Constellium - Propriété Industrielle**
**C-TEC Constellium Technology Center**
**Propriété Industrielle**
**Parc Economique Centr'Alp**
**725, rue Aristide Bergès**
**CS10027**
**38341 Voreppe (FR)**

(54) **PLANCHER INDUSTRIEL COMPRENANT UNE TÔLE MÉTALLIQUE À RELIEFS**

(57)    L'invention concerne un plancher (30), en particulier de véhicules industriels, comprenant une tôle relief (10) présentant sur sa face supérieure (11) une pluralité de motifs en relief, chaque motif en relief comprenant une ou plusieurs parties saillantes (20), lesdits motifs en relief étant disposés de façon périodique, discrète et ordonnée, la hauteur $h$ desdits motifs en reliefs étant comprise entre 0,3 et 3 mm et sur sa face inférieure (12) une surface brute de laminage avec une rugosité $R_{max}$ inférieure à 8 $\mu$m, un support en bois (30) caractérisé en ce que la face inférieure de la tôle relief est collée sur le support en bois avec une colle bi-composant sans cuisson (31) comprenant un composant de résine comprenant au moins une résine époxyde et un composant d'agent de durcissement, et son procédé de fabrication. L'utilisation d'un plancher selon l'invention, dans un véhicule industriel, de préférence un véhicule frigorifique, est avantageuse.

[Fig. 2]

EP 4 748 566 A1

## Description

### Domaine technique

L'invention concerne plancher industriel comprenant une tôle métallique présentant sur une de ses faces une pluralité de motifs en relief disposés de façon périodique, chaque motif étant lui-même constitué d'une ou plusieurs parties saillantes, que nous appellerons « reliefs » et un support en bois.

### Art antérieur

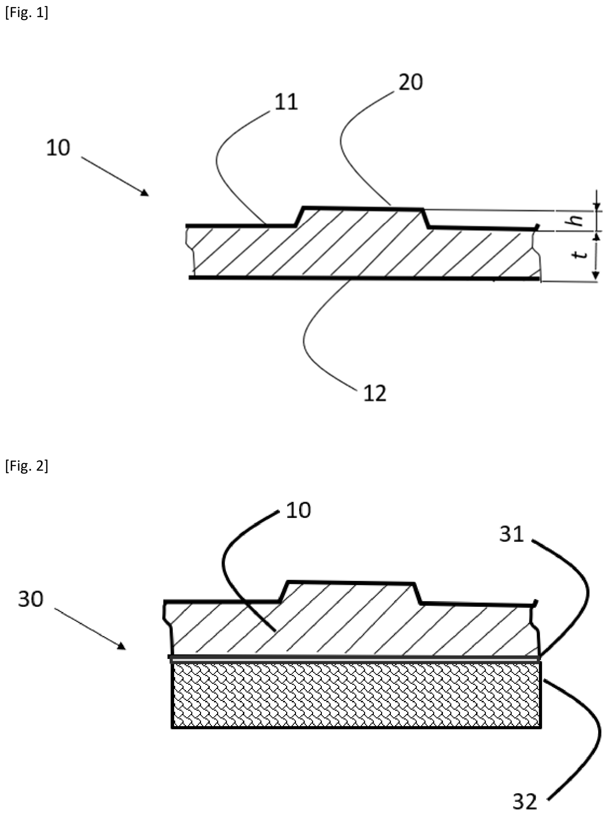

Il existe déjà sur le marché de nombreux modèles de tôles à motifs répétitifs en relief, ou « tôles relief ». Le terme "tôle relief" fait référence selon la norme EN12258-1 à une tôle "imprimée d'un motif en relief sur une face, par laminage". Ces motifs sont par exemple décrits dans la norme NF-EN-1386 et sont souvent désignés de manière imagée (damier, grain d'orge, amande, diamant, grain de riz, damier 2, damier 5, ...). Le motif "damier 5", également appelé "quintet", fréquemment utilisé pour réaliser les tôles de planchers industriels, présente un groupe de 5 bosses allongées, de forme demi-ovoïde, parallèles entre elles qui est entouré de quatre groupes identiques entre eux et déduits du premier groupe par une rotation de 90°. Les tôles qui présentent ce motif "quintet" résistent très bien à l'usure mais ont des qualités antidérapantes moyennes. La Figure 1 représente une tôle relief selon la norme EN1386. La hauteur du motif en relief est la différence, $h$, entre l'épaisseur maximale mesurée jusqu'au sommet du motif et l'épaisseur $t$ de la zone attenante sans relief.

Le motif "grain de riz", décrit dans le brevet FR 2 747 948, est également utilisé pour la réalisation de tôles en alliage d'aluminium pour planchers industriels, qui présentent des propriétés d'emploi satisfaisantes, notamment parce qu'elles possèdent une bonne résistance à l'usure et offrent des conditions de contact frottant qui permettent aux piétons de déambuler sans risque de chute par glissade et aux chariots de rouler sans déraper.

La demande de brevet WO2011/121191 décrit une tôle métallique pour la réalisation de planchers, en particulier de véhicules industriels, sur lesquels doivent circuler des chariots, présentant une pluralité de motifs, dont les reliefs ont une hauteur maximale comprise entre 0,2 et 1,5 mm et une surface frottante, qui présente, quelle que soit la direction selon laquelle elle est mesurée, une largeur moyenne au moins égale à 1mm.

La demande de brevet WO2020/180386 décrit des procédés de traitement de substrat métallique et des articles comprenant une couche fonctionnalisée par un phosphonate.

La demande de brevet WO2022074320 concerne une tôle métallique pour la réalisation de planchers, en particulier de véhicules industriels, ladite tôle présentant sur sa face supérieure une pluralité de motifs en relief, chaque motif en relief comprenant une ou plusieurs parties saillantes, lesdits motifs en relief étant disposés de façon périodique, discrète et ordonnée, la hauteur desdits motifs en reliefs étant comprise entre 0,3 et 3 mm, caractérisée en ce qu'elle présente sur sa face inférieure, destinée à être collée sur un support, une surface rugueuse dont la rugosité Rmax est comprise entre 10 mm et 250 mm. Dans ce document, les tests ont été effectués après collage avec une colle polyuréthane bien connue, « Korapür 666 », marque de fabrique.

Les tôles relief présentent sur la face supérieure, destinée à constituer le sol et être en contact avec les personnes ou véhicules de manutention utilisés par exemple dans le véhicule industriel lesdits motifs répétitifs en relief.

La face inférieure de la tôle relief est le plus souvent collée sur un support, par exemple une planche en bois typiquement en contre-plaqué., pour former le plancher du véhicule industriel. Pour obtenir une adhésion suffisante entre la face inférieure de la tôle et le support, on réalise, selon l'art antérieur, un traitement de surface, typiquement de dégraissage et, le dépôt d'une couche primaire d'adhésion telle que typiquement un vernis. Ce traitement est efficace cependant il contraint à réaliser des opérations supplémentaires qui ont pour conséquence un coût élevé.

Le plancher doit résister au test de cataplasme. Le test de cataplasme a été développé à l'origine pour l'acier et est progressivement devenu la norme pour évaluer les performances de collage, même pour les assemblages comprenant des tôles en alliage d'aluminium. Pour la réalisation de plancher en bois et aluminium, le test cataplasme est considéré comme l'une des exigences de collage les plus sévères. Le test de cataplasme consiste en un test de cisaillement par recouvrement (par exemple selon EN-1465 ou ISO-4587) après vieillissement des échantillons dans des conditions difficiles, telles que plusieurs jours à 70°C dans une humidité saturée (HR 100 %) suivis de conditions de congélation telles que -20°C pendant plusieurs heures.

Le problème que cherche à résoudre la présente invention est d'obtenir un plancher comprenant une tôle relief et du bois et présentant une adhésion améliorée, résistant notamment au test de cataplasme, sans nécessiter une opération de traitement de surface et de dépôt de couche primaire d'adhésion ou d'opération modifiant significativement la rugosité de la face inférieure de la tôle relief, avec un procédé économique.

**Exposé de l'invention**

Un premier objet de l'invention est un plancher, en particulier de véhicules industriels, comprenant une tôle relief présentant sur sa face supérieure une pluralité de motifs en relief, chaque motif en relief comprenant une ou plusieurs parties saillantes, lesdits motifs en relief étant disposés de façon périodique, discrète et ordonnée, la hauteur h desdits motifs en reliefs étant comprise entre 0,3 et 3 mm et sur sa face inférieure une surface brute de laminage avec une rugosité $R_{max}$ inférieure à 8 $\mu$m, un support en bois caractérisé en ce que la face inférieure de la tôle relief est collée sur le support en bois avec une colle bi-composant sans cuisson comprenant un composant de résine comprenant au moins une résine époxyde et un composant d'agent de durcissement.

Un second objet de l'invention est un procédé de fabrication d'un plancher comprenant (i) une étape de laminage en utilisant un cylindre de laminage gravé comportant des cavités gravées permettant d'obtenir une tôle relief ayant des motifs en relief sur sa face supérieure, et une surface brute de laminage avec une rugosité $R_{max}$ inférieure à 8 $\mu$m sur sa face inférieure, (ii) une étape de collage sans cuisson de la face inférieure de la tôle relief ainsi obtenue sur un support en bois avec une colle bi-composant sans cuisson comprenant un composant de résine comprenant au moins une résine époxyde et un composant d'agent de durcissement.

Encore un autre objet de l'invention est l'utilisation d'un plancher selon l'invention ou obtenu par le procédé selon l'invention dans un véhicule industriel, de préférence un véhicule frigorifique.

**Figures**

La Figure 1 est une représentation schématique en coupe d'une tôle relief utile pour le plancher selon l'invention.

La Figure 2 est une représentation schématique en coupe d'un plancher selon l'invention.

La Figure 3 est une représentation schématique du test de cisaillement de recouvrement.

La Figure 4 est une présentation des résultats de l'exemple 1.

La Figure 5 est une présentation des résultats de l'exemple 2.

**Description détaillée de l'invention**

Le plancher selon l'invention, typiquement un plancher de véhicule, comprend une tôle relief collée sur un support en bois. Selon la définition courante, une tôle est un produit laminé de section transversale globalement rectangulaire dont l'épaisseur moyenne n'excède pas 1/10ème de la largeur. Le plancher est la partie d'une construction ou d'un véhicule qui constitue une plateforme horizontale, dont la face supérieure forme le sol. Le paramètre de rugosité $R_{max}$ est défini comme l'écart le plus grand entre le pic le plus élevé et le creux le plus bas sur la longueur analysée. La longueur analysée a une direction perpendiculaire à la direction de laminage de la tôle et a une valeur dépendant de la valeur $R_{max}$, telle que décrite ci-après :

$$0,025 \ \mu m < R_{max} \leq 0,1 \ \mu m$$

longueur analysée typique : 0,08 mm

$$0,1 \ \mu m < R_{max} \leq 0,5 \ \mu m$$

longueur analysée typique : 0,25 mm

$$0,5 \ \mu m < R_{max} \leq 10 \ \mu m$$

longueur analysée typique : 0,80 mm

$$10 \ \mu m < R_{max} \leq 50 \ \mu m$$

longueur analysée typique : 2,50 mm

$$50 \ \mu m < R_{max} \leq 250 \ \mu m$$

longueur analysée typique : 8,00 mm.

Le paramètre $R_{max}$ est notamment mentionné dans la norme BS 1134 2010 A2 dans laquelle les définitions ci-dessus peuvent être complétées si nécessaire.

La tôle relief du plancher selon l'invention présente sur sa face supérieure, destinée à former la face supérieure du plancher, des motifs en relief qui comprennent une ou plusieurs parties saillantes et qui, telle la maille élémentaire d'un réseau cristallin, se répètent de façon périodique et ordonnée. Un motif en relief est donc un morceau de tôle qui se répète indéfiniment par translation suivant deux directions du plan de la tôle. Ce morceau de tôle peut ne comprendre qu'une partie saillante mais il peut aussi comprendre plusieurs parties saillantes qui peuvent avoir des formes ou des orientations différentes. Il ne semble pas avantageux d'avoir des parties saillantes de hauteurs différentes mais cela n'est *a priori* pas exclu. La hauteur $h$ de ces motifs en relief est comprise entre 0,3 mm et 3 mm. La hauteur du motif en relief est la différence, $h$, entre l'épaisseur maximale mesurée jusqu'au sommet du motif et l'épaisseur t de la zone attenante sans relief. Avantageusement, en particulier pour ce qui concerne les tôles à reliefs en alliage d'aluminium, elle est comprise entre 0,3 et 1,5 mm, de préférence entre 0,4 et 0,8 mm.

Lesdits motifs se répètent aussi de façon discrète, car une telle configuration est favorable à la propriété antidérapante du plancher. En effet, les reliefs se comportent comme des indenteurs qui agissent sur la surface de la semelle ou de la bande de roulement de la roue : sous l'effet du poids du piéton ou du chariot, celle-ci se déforme et « s'enfonce » autour du relief sur une certaine hauteur dont l'ordre de grandeur est un, deux ou trois dixièmes de millimètre. Un relief discontinu favorise, dans la semelle ou la bande de roulement, la formation d'un bourrelet tout autour de sa paroi sommitale, ce qui favorise l' « accrochage » de la semelle, de la bande de roulement ou du bandage de la roue sur le plancher. D'autre part, des motifs qui se répètent de façon discrète facilitent le nettoyage, l'écoulement des fluides et leur évacuation étant plus aisée. La tôle relief du plancher selon l'invention ne doit donc pas présenter de relief continu.

Les motifs en relief de la face supérieure sont obtenus par laminage en utilisant un cylindre de laminage gravé caractérisé en ce qu'il comporte des cavités gravées permettant d'obtenir les motifs en relief de la tôle.

La face inférieure de la tôle relief, destinée à être collée sur un support en bois, présente une surface brute de laminage avec une rugosité $R_{max}$ inférieure à 8 $\mu m$, avantageusement au plus 5 $\mu m$ et préférentiellement au plus 3 $\mu m$. Dans un mode de réalisation la rugosité $R_{max}$ de la face inférieure est de 0,1 $\mu m$ à 6 $\mu m$ et de préférence de 0,5 $\mu m$ à 3 $\mu m$.

Les présents inventeurs ont constaté qu'en utilisant une colle bi-composant sans cuisson comprenant un composant de résine comprenant au moins une résine époxyde et un composant d'agent de durcissement, il est possible d'obtenir d'excellents résultats de test de cataplasme, sans réaliser de traitement de surface ni modification de la rugosité de la face inférieure de la tôle relief. La colle bi-composant sans cuisson comprenant un composant de résine comprenant au moins une résine époxyde et un composant d'agent de durcissement durcit à température ambiante, qui se situe typiquement dans la plage d'environ 5 à 40 °C, de préférence d'environ 10 à 35 °C. Le durcissement commence par le mélange des deux composants au moyen d'une réaction chimique. Le collage est typiquement effectué sous vide ou en utilisant une presse hydraulique, dont le plateau peut éventuellement être chauffé à 50°C ou 60°C. Le durcissement est réalisé à température ambiante et s'étend typiquement sur quelques heures à quelques semaines, par exemple entre 1 et 7 jours. La durée dépend, entre autres, de la température, de la réactivité des composants et de leur stœchiométrie ainsi que de la présence d'accélérateurs. Ainsi, contrairement par exemple à certaines colles epoxy mono-composant, aucun four de cuisson n'est nécessaire ce qui rend notamment le procédé de fabrication plus performant. De façon surprenante, la colle bi-composant sans cuisson comprenant un composant de résine comprenant au moins une résine époxyde et un composant d'agent de durcissement permet de coller sur une surface non dégraissée et semble absorber l'huile présente en surface. Préférentiellement l'agent de durcissement de la colle comprend des amines.

Avantageusement la tôle relief du plancher selon l'invention est une tôle en alliage d'aluminium. Avantageusement, la tôle est en un alliage d'aluminium appartenant au groupe regroupant les alliages d'aluminium des séries 1xxx, 3xxx, 5xxx, 6xxx selon la désignation de l'Aluminum Association ainsi que les alliages de la série 7xxx, comprenant moins de 0,4 % Cu. De manière préférée, l'alliage est sélectionné dans la liste constituée de AA1050A, AA3003, AA3103, AA5026, AA5052, AA5083, AA5086, AA5754, AA6061, AA6082 et AA7020.

La Figure 1 représente schématiquement une tôle relief 10 du plancher selon l'invention présentant sur sa face supérieure 11 un motif en relief comprenant une partie saillante 20, de hauteur $h$ et sur sa face inférieure 12, une surface brute de laminage avec une rugosité $R_{max}$ inférieure à 8 $\mu m$.

La Figure 2 représente schématiquement un plancher 30 selon l'invention comprenant une tôle relief 10 collée sur support en bois 32 à l'aide d'une colle bi-composant sans cuisson 31 comprenant un composant de résine comprenant au moins une résine époxyde et un composant d'agent de durcissement.

Le procédé de fabrication des planchers selon l'invention comprend

(i) une étape de laminage en utilisant un cylindre de laminage gravé comportant des cavités gravées permettant d'obtenir une tôle relief 10 ayant des motifs en relief 20 sur sa face supérieure 11, et une surface brute de laminage

avec une rugosité $R_{max}$ inférieure à 8 $\mu$m sur sa face inférieure 12,

(ii) une étape de collage sans cuisson de la face inférieure de la tôle relief ainsi obtenue sur un support en bois 32 avec une colle bi-composant sans cuisson 31 comprenant un composant de résine comprenant au moins une résine époxyde et un composant d'agent de durcissement.

Les deux étapes sont réalisées successivement, sans étape intermédiaire telle qu'un traitement de surface, un vernissage ou un traitement de fraisage électrochimique, fraisage mécanique, brossage, ou déformation typiquement sablage, grenaillage, laminage, embossage, gaufrage permettant de modifier la rugosité de la face inférieure.

Comme il est connu de l'homme du métier, l'étape de laminage comporte l'utilisation d'huile de laminage. La quantité d'huile de laminage sur la face inférieure à l'issue de l'étape (i) et lors de l'étape (ii) est de 0,05 à 4 g/m2 et de préférence de 0,1 à 3 g/m2. Dans un mode de réalisation la quantité d'huile de de laminage sur la face inférieure est au moins 0,1 $g/m^2$ 0,2 $g/m^2$ ou 0,3 $g/m^2$ ou 0,4 $g/m^2$ ou 0,5 $g/m^2$ ou 0,6 $g/m^2$ ou 0,7 $g/m^2$. Dans un mode de réalisation la quantité d'huile de de laminage sur la face inférieure est au plus de 4 $g/m^2$ ou 3 $g/m^2$ ou 2 $g/m^2$.

L'étape de collage est réalisée sans cuisson de la colle bi-composant sans cuisson comprenant un composant de résine comprenant au moins une résine époxyde et un composant d'agent de durcissement. Les composants sont mélangés au moyen d'un procédé approprié, qui peut être réalisé en continu ou par lots. Si le mélange n'a pas lieu directement avant l'application, il faut veiller à ce qu'il ne s'écoule pas trop de temps entre le mélange des composants et l'application.

Le mélange a lieu à température ambiante, qui se situe typiquement dans la plage d'environ 5 à 40 °C, de préférence d'environ 10 à 35 °C. Le durcissement commence par le mélange des deux composants au moyen d'une réaction chimique, comme décrit ci-dessus. Le collage est typiquement effectué sous vide ou en utilisant une presse hydraulique, dont le plateau peut éventuellement être chauffé à 50°C ou 60°C. Le durcissement est réalisé à température ambiante et s'étend typiquement sur quelques heures à quelques semaines par exemple entre 1 et 7 jours. La durée dépend, entre autres, de la température, de la réactivité des composants et de leur stœchiométrie ainsi que de la présence d'accélérateurs. Ainsi, après l'étape (ii) le plancher obtenu n'est pas porté à une température typiquement supérieure à 40 °C. L'absence de cuisson est avantageuse pour la simplicité du procédé.

L'utilisation des planchers selon l'invention dans un véhicule industriel, de préférence un véhicule frigorifique, est particulièrement avantageuse.

**Exemples**

Exemple 1

Dans cet exemple on a comparé la performance en adhésion d'une tôle en alliage AA5086 d'épaisseur 2,5 mm présentant sur la face supérieure un relief de motif grain de riz tel que défini dans la norme NF EN 1386 et sur la face inférieure une rugosité brute de laminage à froid avec une rugosité $R_{max}$ inférieure à 3 $\mu$m et une quantité d'huile de laminage de 0,8 g/m2. Des échantillons ont été préparés selon l'art antérieur en déposant sur la face inférieure un vernis primaire d'adhésion.

Des échantillons de dimension 100x25 mm de tôle ont été collés face brute de laminage sur face brute de laminage à l'aide de plusieurs colles sur une longueur de joint de 16,5 mm.

A : Colle acrylique Lord® 852/25 GB

B : Colle polyurethane Sikaforce® 422

C : Colle polyurethane Dunapol® AD1670

D : Colle bi-composant sans cuisson comprenant une résine époxyde et un agent de durcissement BETAMATE™ 2090 BPA-free

Un essai a par ailleurs été effectué avec la colle polyurethane « Korapür 666 », marque de fabrique, mais le résultat après test de cataplasme n'était même pas favorable avec primaire d'adhésion (rupture adhésive).

Certains échantillons ont subi un vieillissement 14 jours en cataplasme à 70 °C saturé en humidité (100%) et 15h à -20°C. Les performances mécaniques et les morphologies de rupture sont évaluées sur les échantillons d'origine et vieillis à l'aide d'un test de cisaillement par recouvrement (par exemple selon EN-1465 ou ISO-4587). Pour réussir le test, plusieurs critères peuvent être atteints comme la valeur maximale de perte et/ou l'absence de rupture adhésive à rencontrer.

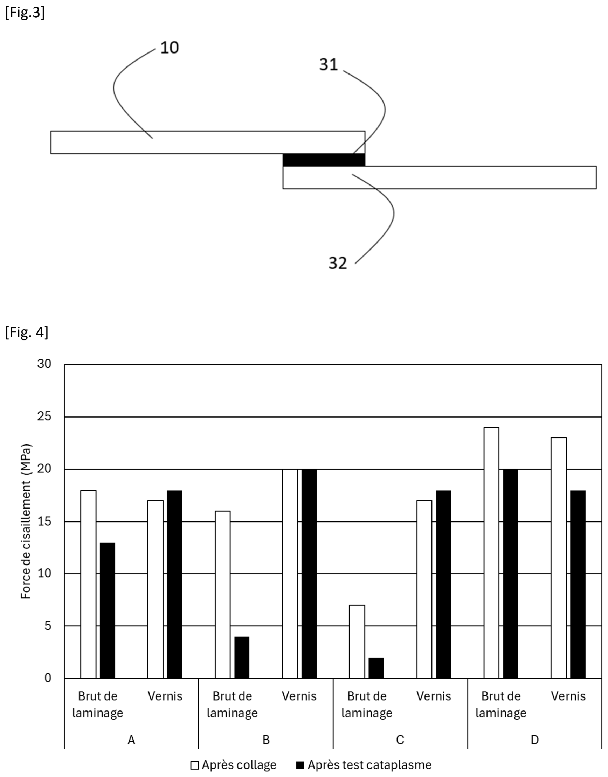

Les résultats obtenus sont présentés dans le Tableau 1 et sur la Figure 4. Lorsque la rupture se produit au sein du bois ou au sein de la colle, la rupture est dite cohésive. Lorsque la rupture se produit à l'interface entre la tôle et la colle, la rupture est dite adhésive.

La colle bi-composant sans cuisson D comprenant une résine époxyde et un agent de durcissement présente les meilleurs résultats sans primaire d'adhésion, que ce soit après collage ou après test de cataplasme.

[Tableau 1]

| Collage métal/métal | | Après collage | | Après Test de Cataplasme | | Facteur de perte |
|---|---|---|---|---|---|---|
| Adhésif | Primaire d'adhésion | Force de cisaillement (MPa) | Rupture | Force de cisaillement (MPa) | Rupture | |
| A | Non | 18 | Cohésive | 13 | Cohésive | 28% |
| A | Oui | 17 | Cohésive | 18 | Cohésive | -6% |
| B | Non | 16 | Adhésive | 4 | Adhésive | 75% |
| B | Oui | 20 | Cohésive | 20 | Cohésive | 0% |
| C | Non | 7 | Adhésive | 2 | Adhésive | 71% |
| C | Oui | 17 | Cohésive | 18 | Cohésive | -6% |
| D | Non | 24 | Cohésive | 20 | Cohésive | 17% |
| D | Oui | 23 | Cohésive | 18 | Cohésive | 22% |

Des échantillons de dimension 100x25 mm de tôle ont également été collés face brute de laminage sur face des planches de contreplaqué à l'aide des mêmes colles sur une longueur de joint de 16,5 mm.

Les résultats de rupture sont présentés dans le Tableau 2

[Tableau 2]

| Collage métal/bois | | |
|---|---|---|
| Adhésif | Primaire d'adhésion | Rupture |
| A | Non | Adhésive |
| A | Oui | Adhésive |
| B | Non | Cohésive |
| B | Oui | Cohésive |
| C | Non | Adhésive |
| C | Oui | Cohésive |
| D | Non | Cohésive |
| D | Oui | Cohésive |

La colle Acrylique A n'a pas permis d'obtenir une rupture cohésive, avec ou sans primaire d'adhésion pour le collage de type bois/métal, ce qui la disqualifie pour l'application envisagée.

Exemple 2

Dans cet exemple on a comparé la performance en adhésion d'une tôle en alliage AA5086 d'épaisseur 2,5 mm présentant sur la face supérieure un relief de motif grain de riz tel que défini dans la norme NF EN 1386 et sur la face inférieure une rugosité brute de laminage à froid avec une rugosité $R_{max}$ inférieure à 3 $\mu$m. Tous les échantillons ont été dégraissés puis on a déposé en surface une quantité de 1 à 6 g/m$^2$ d'un lubrifiant industriel de façon à simuler dans des conditions reproductibles l'effet de la quantité d'huile de laminage résiduelle. Des échantillons de dimension 100x25 mm de tôle ont été collés face brute de laminage sur face brute de laminage à l'aide de la colle epoxy bi-composant BETAMATE™ 2090 BPA-free sur une longueur de joint de 16,5 mm.

Certains échantillons ont subi un vieillissement 14 jours en cataplasme à 70 °C saturé en humidité (100%) et 15h à -20°C. Les performances mécaniques et les morphologies de rupture sont évaluées sur les échantillons d'origine et vieillis après un test de cisaillement par recouvrement (par exemple selon EN-1465 ou ISO-4587).

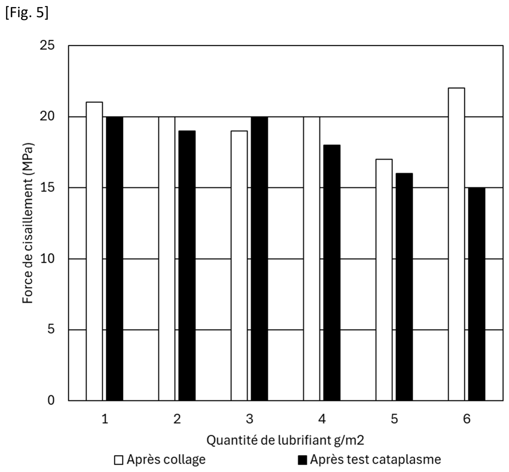

Les résultats sont donnés dans le Tableau 3 et sur la Figure 5.

[Tableau 3]

| Adhésif | Quantité de lubrifiant (g/m$^2$) | Après collage | | Après Test de Cataplasme | | Facteur de perte |
|---|---|---|---|---|---|---|
| | | Force de cisaillement (MPa) | Rupture | Force de cisaillement (MPa) | Rupture | |
| D | 1 | 21 | Cohésive | 20 | Cohésive | 5% |
| D | 2 | 20 | Cohésive | 19 | Cohésive | 5% |
| D | 3 | 19 | Cohésive | 20 | Adhésive | -5% |
| D | 4 | 20 | Cohésive | 18 | Cohésive | 10% |
| D | 5 | 17 | Cohésive | 16 | Cohésive | 6% |
| D | 6 | 22 | Cohésive | 15 | Adhésive | 32% |

Les résultats obtenus sont satisfaisants jusqu'à un grammage de lubrifiant de 4 g/m$^2$.

## Revendications

1. Plancher (30), en particulier de véhicules industriels, comprenant une tôle relief (10) présentant sur sa face supérieure (11) une pluralité de motifs en relief, chaque motif en relief comprenant une ou plusieurs parties saillantes (20), lesdits motifs en relief étant disposés de façon périodique, discrète et ordonnée, la hauteur h desdits motifs en reliefs étant comprise entre 0,3 et 3 mm et sur sa face inférieure (12) une surface brute de laminage avec une rugosité R$_{max}$ inférieure à 8 $\mu$m, un support en bois (30) **caractérisé en ce que** la face inférieure de la tôle relief est collée sur le support en bois avec une colle bi-composant sans cuisson (31) comprenant un composant de résine comprenant au moins une résine époxyde et un composant d'agent de durcissement.

2. Plancher selon la revendication 1 dans lequel la rugosité R$_{max}$ de la face inférieure (12) est au plus 5 $\mu$m et préférentiellement au plus 3 $\mu$m.

3. Plancher selon la revendication 1 ou la revendication 2 dans lequel la tôle relief est en un alliage d'aluminium appartenant au groupe regroupant les alliages d'aluminium des séries 1xxx, 3xxx, 5xxx, 6xxx selon la désignation de l'Aluminum Association ainsi que les alliages de la série 7xxx, comprenant moins de 0,4 % Cu.

4. Plancher selon une quelconque des revendication 1 à 3 dans lequel le composant d'agent de durcissement de la colle bi-composant sans cuisson comprend des amines.

5. Procédé de fabrication d'un plancher (30) selon une quelconque des revendications 1 à 4 comprenant

   (i) une étape de laminage en utilisant un cylindre de laminage gravé comportant des cavités gravées permettant d'obtenir une tôle relief (10) ayant des motifs en relief (20) sur sa face supérieure (11), et une surface brute de laminage avec une rugosité R$_{max}$ inférieure à 8 $\mu$m sur sa face inférieure (12),
   (ii) une étape de collage sans cuisson de la face inférieure de la tôle relief ainsi obtenue sur un support en bois (32) avec une colle bi-composant sans cuisson (31) comprenant un composant de résine comprenant au moins une résine époxyde et un composant d'agent de durcissement.

6. Procédé selon la revendication 5 dans lequel la quantité d'huile de laminage sur la face inférieure à l'issue de l'étape (i) et lors de l'étape (ii) est de 0,05 à 4 g/m$^2$ et de préférence d de 0,1 à 3 g/m$^2$.

7. Procédé selon la revendication 5 ou la revendication 6 dans lequel lors de l'étape (i) l'étape de laminage est réalisée de façon à ce que la rugosité R$_{max}$ de la face inférieure (12) soit au plus 5 $\mu$m et préférentiellement au plus 3 $\mu$m.

8. Utilisation d'un plancher selon l'une quelconque des revendications 1 à 3 ou obtenu par le procédé selon l'une quelconque des revendications 5 à 7 dans un véhicule industriel, de préférence un véhicule frigorifique.

[Fig. 1]

[Fig. 2]

[Fig.3]

[Fig. 4]

[Fig. 5]

Europäisches
Patentamt

European
Patent Office

Office européen
des brevets

## RAPPORT DE RECHERCHE EUROPEENNE

**Numéro de la demande**

**EP 25 21 7528**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | WO 2022/074320 A1 (CONSTELLIUM ISSOIRE [FR]) 14 avril 2022 (2022-04-14) <br> * page 4, ligne 1 - ligne 9; figures 3,4 * <br> * page 6, ligne 22 - ligne 30 * <br> * page 9, ligne 5 - ligne 8 * <br> ----- | 1-8 | INV. <br> B32B15/10 <br> B32B3/30 <br> B21B1/22 <br> B21H8/00 <br> B32B7/12 |
| A | EP 2 115 233 B1 (CONSTELLIUM ISSOIRE [FR]) 27 juillet 2016 (2016-07-27) <br> * alinéa [0055] * <br> ----- | 1-8 | B32B15/20 <br> B32B21/04 <br> B44C5/04 <br> B62D25/00 |
| A | US 2023/366057 A1 (SCHULZ JENNIFER [DE] ET AL) 16 novembre 2023 (2023-11-16) <br> * alinéas [0007], [0008], [0033], [0044], [0093] - [0098] * <br> ----- | 1-8 | B62D25/20 <br> B62D29/00 <br> B62D29/02 |

**DOMAINES TECHNIQUES RECHERCHES (IPC)**

B32B
B21B
B21L
B44F
B62D
B21H
B44C
B21C

Le présent rapport a été établi pour toutes les revendications

| Lieu de la recherche | Date d'achèvement de la recherche | Examinateur |
|---|---|---|
| La Haye | 7 avril 2026 | Aspeby, Erika |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 21 7528

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-04-2026

| Document brevet cité au rapport de recherche | Date de publication | Membre(s) de la famille de brevet(s) | Date de publication |
|---|---|---|---|
| WO 2022074320 A1 | 14-04-2022 | EP 4225518 A1 | 16-08-2023 |
| | | ES 2994217 T3 | 20-01-2025 |
| | | FR 3114983 A1 | 15-04-2022 |
| | | JP 2023546819 A | 08-11-2023 |
| | | US 2023415210 A1 | 28-12-2023 |
| | | WO 2022074320 A1 | 14-04-2022 |
| | | ZA 202303537 B | 31-07-2024 |
| EP 2115233 B1 | 27-07-2016 | AU 2008228154 A1 | 25-09-2008 |
| | | EP 2115233 A2 | 11-11-2009 |
| | | FR 2912490 A1 | 15-08-2008 |
| | | US 2008202066 A1 | 28-08-2008 |
| | | WO 2008113911 A2 | 25-09-2008 |
| US 2023366057 A1 | 16-11-2023 | CN 116234690 A | 06-06-2023 |
| | | CN 120866737 A | 31-10-2025 |
| | | DE 102020124488 A1 | 24-03-2022 |
| | | EP 4214347 A1 | 26-07-2023 |
| | | EP 4474515 A2 | 11-12-2024 |
| | | US 2023366057 A1 | 16-11-2023 |
| | | US 2024425946 A1 | 26-12-2024 |
| | | WO 2022058531 A1 | 24-03-2022 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- FR 2747948
- WO 2011121191 A
- WO 2020180386 A
- WO 2022074320 A